# EUROPÄISCHE PATENTSCHRIFT

(11) **EP 2 464 484 B1**
(45) Veröffentlichungstag und Bekanntmachung des Hinweises auf die Patenterteilung: **21.12.2022**
(21) Anmeldenummer: 10728188.3
(22) Anmeldetag: 23.06.2010
(51) Int. Cl.: B23D 61/12

(54) **WERKZEUGVORRICHTUNG**
TOOL DEVICE
DISPOSITIF D'OUTIL

(30) Priorität: 12.08.2009 DE 102009028483
(43) Veröffentlichungstag der Anmeldung: 20.06.2012
(73) Patentinhaber: Robert Bosch GmbH, 70442 Stuttgart (DE)
(72) Erfinder: BOZIC, Milan, CH-4500 Solothurn (CH)
(86) Internationale Anmeldenummer: PCT/EP2010/058863
(87) Internationale Veröffentlichungsnummer: WO 2011/018266

(56) Entgegenhaltungen:
- DE-U1- 29 613 157
- DE-U1-202004 017 351
- GB-A- 1 406 281

## Beschreibung

### Stand der Technik

Die Erfindung geht aus von einem Werkzeug nach dem Oberbegriff des Anspruchs 1.

Aus der Druckschrift DE 20 2004 017 351 U1 ist bereits ein solches Werkzeug bekannt das eine Spitze, eine Arbeitskante und eine Kante aufweist, welche an die Spitze anschließt und der Arbeitskante gegenüberliegt und welche zumindest einen ersten Kantenbereich aufweist, welcher gerade ist und mit der Arbeitskante einen Neigungswinkel einschließt, der zwischen 0° und 2,5° liegt. Ferner weist das Werkzeug ein Befestigungselement auf, das zu einer Befestigung an einer Werkzeugaufnahme einer Werkzeugmaschine vorgesehen ist. Die Werkzeugmaschine umfasst eine Rolle, welche bei einem Betriebsvorgang an einem Rollenanlagekantenbereich des Werkzeugs abrollt. Der Rollenanlagekantenbereich ist Teil eines zusammenhängenden Kantenbereichs, welcher der Arbeitskante gegenüberliegt und der ausgehend von einem ersten Endpunkt des Kantenbereichs, welcher einen kürzeren Abstand von dem Befestigungselement aufweist als ein zweiter Endpunkt des Kantenbereichs, in einem Verlauf zu dem zweiten Endpunkt an jedem Punkt eine im Vergleich zu allen anderen Punkten des Kantenbereichs gleichgerichtete Neigung aufweist, welche entweder weg von oder zu der Arbeitskante gerichtet ist.

Ferner sei auf die Druckschriften GB 1 406 281, DE 195 21 247 A1 und DE 296 13 157 U1 verwiesen.

### Offenbarung der Erfindung

Die Erfindung betrifft ein Werkzeug mit den Merkmalen des Anspruchs 1. Zweckmäßige Weiterbildungen ergeben sich aus den abhängigen Ansprüchen.

Unter einer "Arbeitskante" des Werkzeugs soll insbesondere eine Kante des Werkzeugs verstanden werden, welche zu einem In-Kontakt-Treten mit Werkstücken und zu einem Bearbeiten der Werkstücke vorgesehen ist und welche vorzugsweise Werkstückbearbeitungsausformungen und besonders bevorzugt Sägezähne aufweist, wobei während des In-Kontakt-Tretens vorzugsweise Material der Werkstücke abgetragen wird und besonders bevorzugt wenigstens ein Teil des Werkstücks abgetrennt wird. Unter einer "Spitze" des Werkzeugs soll insbesondere ein Teilbereich des Werkzeugs verstanden werden, welcher an die Arbeitskante anschließt und welcher ein Ende des Werkzeugs bildet, welches vorzugsweise ein Ende des Werkzeugs bezüglich einer Längsrichtung des Werkzeugs ist und welches besonders bevorzugt einem Befestigungsende des Werkzeugs gegenüberliegt. Hierbei erstreckt sich der Teilbereich entlang einer Haupterstreckungsrichtung des Werkzeugs vorzugsweise über höchstens vierzig Prozent, bevorzugt über höchstens fünfundzwanzig Prozent und besonders bevorzugt über höchstens zehn Prozent einer maximalen Erstreckungslänge des Werkzeugs. Unter einem "Befestigungsende" des Werkzeugs soll insbesondere ein Ende des Werkzeugs verstanden werden, welches ein Befestigungselement des Werkzeugs aufweist, das zu einer Befestigung des Werkzeugs an einer Werkzeugaufnahme einer Werkzeugmaschine vorgesehen ist. Unter "einem Kantenbereich" soll insbesondere ein Teil einer Kante verstanden werden. Darunter, dass die Kante der Arbeitskante "gegenüberliegt", soll insbesondere verstanden werden, dass die Kante zwischen zwei Ebenen angeordnet ist, welche jeweils einen Endpunkt der

Kante aufweisen und welche nur Flächenerstreckungsrichtungen aufweisen, die senkrecht zu einer Längsrichtung der Arbeitskante sind. Darunter, dass "ein gerader Kantenbereich einen Neigungswinkel mit der Arbeitskante einschließt", soll rader Kantenbereich einen Neigungswinkel mit der Arbeitskante einschließt", soll insbesondere verstanden werden, dass eine Verlängerung des geraden Kantenbereichs und eine Verlängerung einer geradlinigen Verbindung von einander entsprechenden Punkten und vorzugsweise von Spitzen von bestimmten Werkstückbearbeitungsausformungen der Arbeitskante, welche im Vergleich zu anderen Werkstückbearbeitungsausformungen der Arbeitskante eine maximale Größe aufweisen und welche vorzugsweise durch Sägezähne gebildet sind, den Neigungswinkel einschließen. Darunter, dass "der zweite Kantenbereich eine andere Neigung aufweist als der erste Kantenbereich", soll verstanden werden, dass der zweite Kantenbereich frei ist von geraden Kantenabschnitten, welche mit der Arbeitskante einen gleichen Neigungswinkel einschließen wie der erste Kantenbereich. Mit einer erfindungsgemäßen Ausgestaltung kann eine qualitativ hochwertige Benutzbarkeit erreicht werden. Insbesondere kann bei einem Werkstückbearbeitungsvorgang, bei dem das Werkzeug verwendet wird, eine komfortable und insbesondere weitgehend vibrationsfreie Handhabung erreicht werden. Ferner kann im Besonderen eine qualitativ hochwertige Bearbeitbarkeit des Werkstücks und eine ausfransungsfreie Beschaffenheit eines Bearbeitungsbereichs des Werkstücks, welcher mit dem Werkzeug bearbeitet wurde, erreicht werden.

Ferner wird vorgeschlagen, dass der Neigungswinkel zwischen 0° und 2° liegt. Hierdurch kann eine besonders hochwertige Benutzbarkeit erreicht werden, insbesondere kann eine effiziente Bearbeitung von Werkstücken erreicht werden. Außerdem kann in einem Fall, in welchem die Arbeitskante Sägezähne aufweist, erreicht werden, dass ein Abgleiten der Sägezähne bei einem Arbeitshub bei einer Vielzahl verschiedenartiger Werkstücke und insbesondere bei Werkstücken aus Metall vermieden wird und ein Abbrechen von Sägezähnen verhindert wird. Vorzugsweise beträgt der Neigungswinkel etwa 1°. Darunter, dass "der Neigungswinkel etwa 1° beträgt", soll insbesondere verstanden werden, dass der Neigungswinkel um höchstens 50 %, vorzugsweise um höchstens 30 %, bevorzugt um höchstens 10 % und besonders bevorzugt um höchstens 5 % von 1° abweicht. Hierdurch kann eine effiziente Verwendbarkeit erreicht werden. Insbesondere kann bei einer Bearbeitung eines Werkstücks ein besonders hoher Materialabtrag erreicht werden.

Mit Vorteil ist der zweite Kantenbereich im Wesentlichen parallel relativ zur Arbeitskante. Darunter, dass ein "Kantenbereich im Wesentlichen parallel zur Arbeitskante ist", soll insbesondere verstanden werden, dass der Kantenbereich im Wesentlichen geradlinig und vorzugsweise vollständig geradlinig ist und eine Verlängerung des Kantenbereichs entweder parallel zur Arbeitskante ist oder wenigstens einen spitzen Winkel mit der Arbeitskante einschließt, welcher höchstens 20°, vorzugsweise höchstens 7° und besonders bevorzugt höchstens 3° beträgt. Hierdurch kann eine komfortable Benutzbarkeit erreicht werden. Insbesondere kann bei einer Benutzung des Werkzeugs mittels einer Werkzeugmaschine ein geringes Maß an Vibrationen erreicht werden.

Weiterhin wird vorgeschlagen, dass der zweite Kantenbereich an die Spitze anschließt. Damit kann eine kompakte Bauweise erreicht werden. Insbesondere kann eine geringe maximale Erstreckungslänge des Werkzeugs senkrecht zur Arbeitskante erreicht werden.

Erfindungsgemäß weist die Kante wenigstens einen dritten Kantenbereich auf, welcher beabstandet von dem zweiten Kantenbereich angeordnet ist. Hierdurch kann eine hochwertige Benutzbarkeit erreicht werden. Insbesondere kann eine verschleißarme Verwendbarkeit erreicht werden. Ferner kann insbesondere erreicht werden, dass eine Führungsrolle einer Werkzeugmaschine zur Führung des Werkzeugs bei einem Betriebsvorgang in einem Zustand, in dem das Werkzeug in eine Werkzeugaufnahme der Werkzeugmaschine aufgenommen ist und in welchem keine Verwendung des Werkzeugs erfolgt, drucklos an dem Werkzeug anliegt, wodurch eine geringe Beanspruchung der Führungsrolle und einer Lagereinheit zur Lagerung der Führungsrolle erreicht werden kann.

Ferner ist vorgesehen, dass der dritte Kantenbereich im Wesentlichen parallel relativ zu der Arbeitskante ist. Damit kann eine flexible Benutzbarkeit erreicht werden.

In einer bevorzugten Ausführungsform der Erfindung beträgt ein Abstand der Kante von der Arbeitskante höchstens etwa 10 mm. Darunter, dass ein "Abstand der Kante von der Arbeitskante höchstens 10 mm" beträgt, soll insbesondere verstanden werden, dass ein maximaler Abstand, den ein Punkt der Kante von der Arbeitskante aufweist, höchstens 10 mm beträgt. Unter einem "Abstand" eines ersten Punkts von der Arbeitskante soll insbesondere eine geringste Entfernung von derjenigen Menge von Entfernungen, die Punkte der Arbeitskante von dem ersten Punkt aufweisen, verstanden werden. Darunter, dass "der Abstand etwa 10 mm beträgt", soll insbesondere verstanden werden, dass der Abstand höchstens um 10 %, vorzugsweise um 4 % und besonders bevorzugt um höchstens 2 % von 10 mm abweicht. Damit kann eine kostengünstige Bauweise erreicht werden. Insbesondere kann erreicht werden, dass das Werkzeug aus einer kostengünstig aufgebauten und herstellbaren Rohform herstellbar ist. Vorzugsweise weist das Werkzeug wenigstens ein Befestigungsmittel mit wenigstens einem Kantenabschnitt auf, der von einer Verlängerung der Arbeitskante einen gleichen senkrechten Abstand aufweist wie zumindest ein Punkt der Kante. Unter "einem senkrechten Abstand eines Punkts von einer Verlängerung der Arbeitskante" soll insbesondere eine Länge einer Strecke verstanden werden, welche den Punkt mit der Verlängerung der Arbeitskante verbindet und welche senkrecht zu der Verlängerung der Arbeitskante ist. Unter "einem senkrechten Abstand des Kantenabschnitts von einer Verlängerung der Arbeitskante" soll insbesondere ein maximaler und/oder ein minimaler senkrechter Abstand verstanden werden, den Punkte des Kantenabschnitts von der Verlängerung der Arbeitskante aufweisen. Damit kann eine flexible Verwendbarkeit erreicht werden. Insbesondere kann ein kombiniertes Verwenden des Werkzeugs mit bestimmten Werkzeugmaschinen erreicht werden.

Mit Vorteil weist der zweite Kantenbereich eine andere Neigung auf als jeder Teilbereich der Spitze. Damit kann eine stabile Bauweise erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Teilschnitt eines Systems mit einer Werkzeugmaschine und einem Werkzeug,
- Fig. 2: eine schematische Seitenansicht des Werkzeugs,
- Fig. 3: eine schematische Detailansicht einer Arbeitskante des Werkzeugs,
- Fig. 4: eine Ansicht einer Verlängerung der Arbeitskante und einer Verlängerung eines Kantenbereichs des Werkzeugs,
- Fig. 5: einen Teil eines alternativen Ausführungsbeispiels eines Werkzeugs und
- Fig. 6: einen Teil eines weiteren alternativen Ausführungsbeispiels eines Werkzeugs. Beschreibung der Ausführungsbeispiele

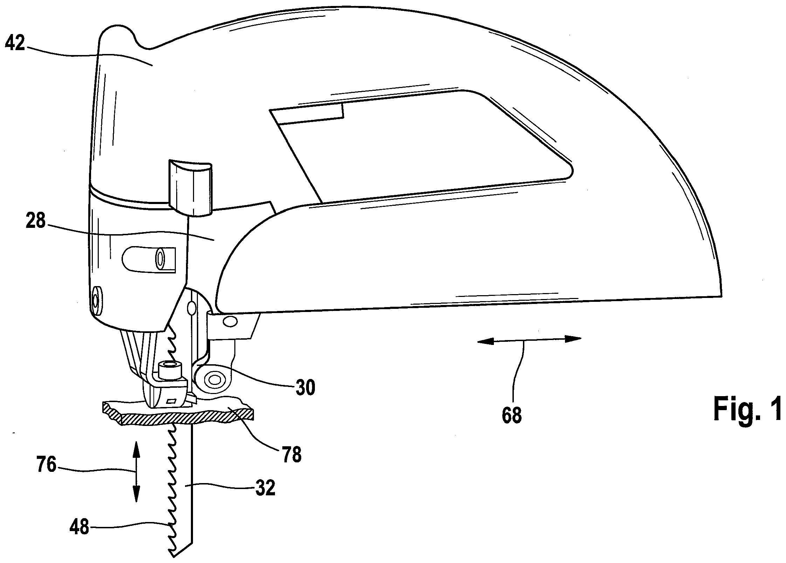

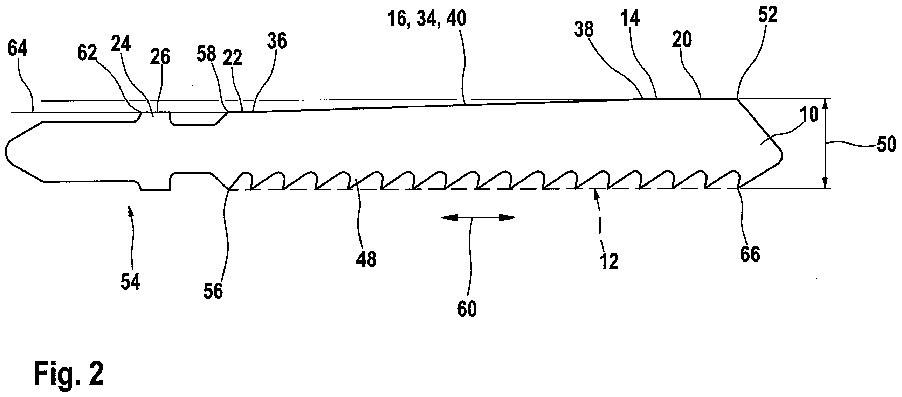

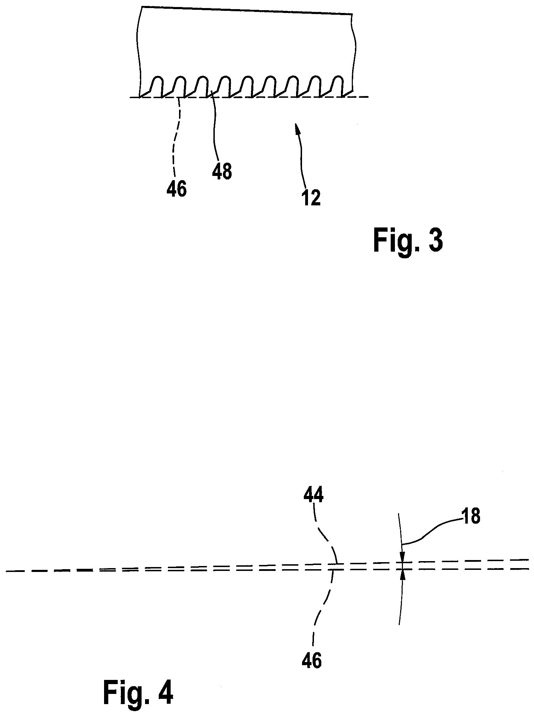

Figur 1 zeigt ein System mit einer als Stichsäge ausgebildeten Werkzeugmaschine 42 und mit einem Werkzeug 32, das durch ein Stichsägensägeblatt gebildet ist, welches eine Spitze 10 und eine Arbeitskante 12 aufweist (Figur 2). Erfindungsgemäß weist das Werkzeug 32 eine Kante 14 auf, die direkt an die Spitze 10 anschließt und der Arbeitskante 12 gegenüberliegt. Die Kante 14 weist einen ersten Kantenbereich 16 auf, der gerade ist und mit der Arbeitskante 12 einen Neigungswinkel 18 einschließt, der 1° beträgt. Eine geradlinige Verlängerung des geraden Kantenbereichs 16, welche eine Gerade 44 bildet, und eine geradlinige Verlängerung von geraden Verbindungsstücken von Sägezähnen 48 der Arbeitskante 12, welche eine Gerade 46 bildet, schließen den Neigungswinkel 18 ein (Figuren 2 bis 4).

Die Kante 14 weist einen zweiten Kantenbereich 20 auf, der eine andere Neigung aufweist als der erste Kantenbereich 16 und jeder Teilbereich der Spitze 10. Der zweite Kantenbereich 20 beginnt an einem der Endpunkte 36, 38 des ersten Kantenbereichs 16. Die Arbeitskante 12 - und insbesondere die Gerade 46 - ist parallel zu dem gerade ausgebildeten Kantenbereich 16. Ferner schließt der zweite Kantenbereich 20 unmittelbar an die Spitze 10 an.

Des Weiteren weist die Kante 14 einen dritten Kantenbereich 22 auf, welcher direkt an den ersten Kantenbereich 16 anschließt. Der dritte Kantenbereich 22 ist beabstandet von dem zweiten Kantenbereich 20 angeordnet und gerade ausgebildet. Außerdem ist der dritte Kantenbereich 22 parallel zu der Arbeitskante 12 und insbesondere parallel zu der Geraden 46.

Ein maximaler Abstand 50 der Kante 14 von der Arbeitskante 12, und zwar von der Geraden 46, beträgt 10 mm. Ein Punkt 52 der Kante 14, der von der Geraden 46 - und damit von der Arbeitskante 12 - im Vergleich zu allen anderen Punkten der Kante 14 den größten Abstand hat, ist ein Endpunkt eines Endes der Kante 14, das direkt an die Spitze 10 anschließt. Der Punkt 52 liegt einem Endpunkt 66 der Arbeitskante 12, an welchem die Arbeitskante 12 an die Spitze 10 anschließt, gegenüber.

Ausgehend von einem Ende 56 der Arbeitskante 12 und einem Ende 58 des dritten Kantenbereichs 22, welche von der Spitze 10 abgewandt sind, verjüngt sich das Werkzeug 32 in eine Richtung weg von der Spitze 10 entlang einer Längsrichtung 60 des Werkzeugs 32.

An einem Endbereich 54 des Werkzeugs 32, welcher einem Ende des Werkzeugs 32 gegenüberliegt, das durch die Spitze 10 gebildet ist, weist das Werkzeug 32 ein Befestigungselement 24 auf, welches von zwei Erhebungen 62 gebildet ist (Figur 2). Eine der Erhebungen 62 weist einen geraden Kantenabschnitt 26 auf. Eine Verlängerung des geraden Kantenabschnitts 26 bildet eine Gerade 64, welche identisch ist mit einer Geraden, die durch eine Verlängerung des dritten geraden Kantenbereichs 22 gebildet ist.

Das in Figur 1 dargestellte System ist von einer Werkzeugvorrichtung gebildet, welche die Werkzeugmaschine 42 und das Werkzeug 32 aufweist. Die Werkzeugmaschine weist eine Werkzeugaufnahmeeinheit 28 auf, die eine Rolle 30 aufweist. Das Befestigungselement 24 befestigt das Werkzeug 32 an der Werkzeugaufnahmeeinheit 28. Der erste Kantenbereich 16 ist mit einem zusammenhängenden Kantenbereich 34 identisch. Ferner ist der zusammenhängende Kantenbereich 34 mit einem Rollenanlagekantenbereich 40 identisch. Der Rollenanlagekantenbereich 40 ist genau der Teil der Kante 14, an welchem bei einem Betriebsvorgang die Rolle 30 abrollt. Andere Teile der Kante 14, die sich von dem ersten Kantenbereich 16 unterscheiden, bleiben bei einem Betrieb der Werkzeugmaschine 42 von der Rolle 30 unberührt.

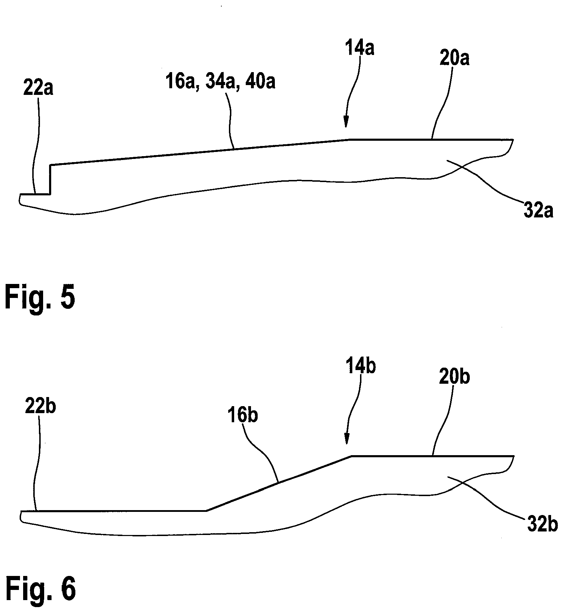

In den Figuren 5 und 6 sind erfindungsgemäße alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Figuren 5 und 6 die Buchstaben "a" und "b" hinzugefügt. Die nachfolgende Beschreibung beschränkt sich im Wesentlichen auf die Unterschiede zu dem Ausführungsbeispiel in den Figuren 1 bis 4, wobei bezüglich gleich bleibender Bauteile, Merkmale und Funktionen auf die Beschreibung des Ausführungsbeispiels in den Figuren 1 bis 4 verwiesen werden kann.

Figur 5 zeigt einen Teil eines alternativen Ausführungsbeispiels eines Werkzeugs 32a. Ein erster Kantenbereich 16a des Werkzeugs 32a schließt mit einer Arbeitskante 12 des Werkzeugs 32a einen Neigungswinkel von 0,5° ein.

Figur 6 zeigt einen Teil eines weiteren alternativen Ausführungsbeispiels eines Werkzeugs 32b. Ein erster Kantenbereich 16b des Werkzeugs 32b schließt mit einer Arbeitskante 12 des Werkzeugs 32b einen Neigungswinkel von 2° ein.

## Patentansprüche

1. Werkzeug mit wenigstens einer Spitze (10), zumindest einer Arbeitskante (12) und wenigstens einer Kante (14; 14a; 14b), welche an die Spitze (10) anschließt und der Arbeitskante (12) gegenüberliegt und welche zumindest einen ersten Kantenbereich (16; 16a; 16b) aufweist, welcher gerade ist und mit der Arbeitskante (12) einen Neigungswinkel (18) einschließt, der zwischen 0° und 2,5° liegt, wobei die Kante (14; 14a; 14b) einen zweiten Kantenbereich (20; 20a; 20b) aufweist, der eine andere Neigung aufweist als der erste Kantenbereich (16; 16a; 16b) und somit frei ist von geraden Kantenabschnitten, welche mit der Arbeitskante (12) einen gleichen Neigungswinkel einschließen wie der erste Kantenbereich (16; 16a; 16b), wobei der zweite Kantenbereich (20; 20a; 20b) zwischen der Spitze (10) und dem ersten Kantenbereich (16; 16a; 16b) angeordnet ist, im Wesentlichen parallel relativ zur Arbeitskante (12) ausgebildet ist und/oder eine andere Neigung als jeder Teilbereich der Spitze (10) aufweist,
**dadurch gekennzeichnet, dass**
die Kante (14) wenigstens einen dritten Kantenbereich (22; 22a; 22b) aufweist, welcher angrenzend an den ersten Kantenbereich (16; 16a; 16b) und gegenüberliegend beabstandet von dem zweiten Kantenbereich (20; 20a; 20b) angeordnet ist, eine andere Neigung aufweist als der erste Kantenbereich (16; 16a; 16b) und im Wesentlichen geradlinig ist und parallel zu der Arbeitskante (12) ist.

2. Werkzeug nach Anspruch 1,
**dadurch gekennzeichnet, dass**
der Neigungswinkel (18) des ersten Kantenbereich (16; 16a; 16b) zwischen 0° und 2° liegt.

3. Werkzeug nach Anspruch 2,
**dadurch gekennzeichnet, dass**
der Neigungswinkel (18) des ersten Kantenbereich (16; 16a; 16b) etwa 1° beträgt.

4. Werkzeug nach einem der vorherigen Ansprüche,
**dadurch gekennzeichnet, dass**
der zweite Kantenbereich (20; 20a; 20b) im Wesentlichen geradlinig ist und parallel zur Arbeitskante (12) ist oder einen spitzen Winkel mit der Arbeitskante (12) einschließt, welcher höchstens 20° beträgt.

5. Werkzeug nach einem der vorherigen Ansprüche,
**dadurch gekennzeichnet, dass**
der zweite Kantenbereich (20; 20a; 20b) an die Spitze (10) anschließt.

6. Werkzeug nach einem der vorherigen Ansprüche,
**dadurch gekennzeichnet, dass**
ein Abstand der Kante (14; 14a; 14b) von der Arbeitskante (12) höchstens etwa 10 mm beträgt.

7. Werkzeug nach einem der vorherigen Ansprüche,
**gekennzeichnet durch**
wenigstens ein Befestigungselement (24) mit wenigstens einem Kantenabschnitt (26), der von einer Verlängerung der Arbeitskante (12) einen gleichen senkrechten Abstand aufweist wie zumindest ein Punkt der Kante (14; 14a; 14b).

8. Werkzeug nach einem der vorherigen Ansprüche,
**dadurch gekennzeichnet, dass**
der zweite Kantenbereich (20; 20a; 20b) eine andere Neigung aufweist als jeder Teilbereich der Spitze (10).

9. System mit einer Werkzeugmaschine (42), insbesondere einer Handwerkzeugmaschine, bevorzugt einer Stichsäge, und mit einem Werkzeug (32; 32a; 32b) nach einem der Ansprüche 1 bis 8.

## Claims

1. Tool having at least one tip (10), at least one working edge (12) and at least one edge (14; 14a; 14b) which adjoins the tip (10) and is located opposite the working edge (12) and which has at least one first edge region (16; 16a; 16b), which is straight and includes an angle of inclination (18) of between 0° and 2.5° with the working edge (12), wherein the edge (14; 14a; 14b) has a second edge region (20; 20a; 20b) which has a different inclination from the first edge region (16; 16a; 16b) and is therefore free of straight edge portions which include the same angle of inclination with the working edge (12) as the first edge region (16; 16a; 16b), wherein the second edge region (20; 20a; 20b) is arranged between the tip (10) and the first edge region (16; 16a; 16b), is substantially parallel relative to the working edge (12) and/or has a different inclination from each partial region of the tip (10),
**characterized in that**
the edge (14) has at least one third edge region (22; 22a; 22b), which is arranged so as to adjoin the first edge region (16; 16a; 16b) and on the opposite side at a distance from the second edge region (20; 20a; 20b), has a different inclination from the first edge region (16; 16a; 16b) and is substantially rectilinear and parallel to the working edge (12).

2. Tool according to Claim 1,
**characterized in that**
the angle of inclination (18) of the first edge region (16; 16a; 16b) is between 0° and 2°.

3. Tool according to Claim 2,
**characterized in that**
the angle of inclination (18) of the first edge region (16; 16a; 16b) is about 1°.

4. Tool according to one of the preceding claims,
**characterized in that**
the second edge region (20; 20a; 20b) is substantially rectilinear and is parallel to the working edge (12) or includes an acute angle with the working edge (12) which is at most 20°.

5. Tool according to one of the preceding claims,
**characterized in that**
the second edge region (20; 20a; 20b) adjoins the tip (10).

6. Tool according to one of the preceding claims,
**characterized in that**
a distance of the edge (14; 14a; 14b) from the working edge (12) is at most about 10 mm.

7. Tool according to one of the preceding claims,
**characterized by**
at least one fastening element (24) having at least one edge portion (26) which is at the same perpendicular distance from an extension of the working edge (12) as at least one point of the edge (14; 14a; 14b).

8. Tool according to one of the preceding claims,
**characterized in that**
the second edge region (20; 20a; 20b) has a different inclination from each partial region of the tip (10).

9. System having a power tool (42), in particular a hand-held power tool, preferably a jigsaw, and having a tool (32; 32a; 32b) according to one of Claims 1 to 8.

## Revendications

1. Outil comprenant au moins une pointe (10), au moins un bord de travail (12) et au moins un bord (14 ; 14a ; 14b) qui est contigu à la pointe (10) et opposé au bord de travail (12) et qui présente au moins une première zone de bord (16 ; 16a ; 16b) qui est droite et forme avec le bord de travail (12) un angle d'inclinaison (18), qui est compris entre 0° et 2,5°, le bord (14 ; 14a ; 14b) présentant une deuxième zone de bord (20 ; 20a ; 20b),
qui présente une autre inclinaison que la première zone de bord (16 ; 16a ; 16b) et qui est donc dépourvue de sections de bord droites qui forment avec le bord de travail (12) un angle d'inclinaison identique à la première zone de bord (16 ; 16a ; 16b), la deuxième zone de bord (20 ; 20a ; 20b) étant agencée entre la pointe (10) et la première zone de bord (16 ; 16a ; 16b), étant configurée sous forme essentiellement parallèle au bord de travail (12) et/ou présentant une autre inclinaison que chaque zone partielle de la pointe (10), **caractérisé en ce que**
le bord (14) présente au moins une troisième zone de bord (22 ; 22a ; 22b), qui est agencée de manière adjacente à la première zone de bord (16 ; 16a ; 16b) et à l'opposé à distance de la deuxième zone de bord (20 ; 20a ; 20b), qui présente une autre inclinaison que la première zone de bord (16 ; 16a ; 16b) et qui est essentiellement rectiligne et parallèle au bord de travail (12).

2. Outil selon la revendication 1, **caractérisé en ce que** l'angle d'inclinaison (18) de la première zone de bord (16 ; 16a ; 16b) est compris entre 0° et 2°.

3. Outil selon la revendication 2, **caractérisé en ce que** l'angle d'inclinaison (18) de la première zone de bord (16 ; 16a ; 16b) est d'environ 1°.

4. Outil selon l'une quelconque des revendications précédentes, **caractérisé en ce que** la deuxième zone de bord (20 ; 20a ; 20b) est essentiellement rectiligne et est parallèle au bord de travail (12) ou forme un angle aigu avec le bord de travail (12) qui est au plus de 20°.

5. Outil selon l'une quelconque des revendications précédentes, **caractérisé en ce que** la deuxième zone de bord (20 ; 20a ; 20b) est contiguë à la pointe (10).

6. Outil selon l'une quelconque des revendications précédentes, **caractérisé en ce que** la distance entre le bord (14 ; 14a ; 14b) et le bord de travail (12) est d'au plus environ 10 mm.

7. Outil selon l'une quelconque des revendications précédentes, **caractérisé par** au moins un élément de fixation (24) comprenant au moins une section de bord (26) qui présente, par rapport à un prolongement du bord de travail (12), une distance verticale égale à celle d'au moins un point du bord (14 ; 14a ; 14b).

8. Outil selon l'une quelconque des revendications précédentes, **caractérisé en ce que** la deuxième zone de bord (20 ; 20a ; 20b) présente une autre inclinaison que chaque zone partielle de la pointe (10).

9. Système comprenant une machine-outil (42), notamment une machine-outil manuelle, de préférence une scie sauteuse, et comprenant un outil (32 ; 32a ; 32b) selon l'une quelconque des revendications 1 à 8.
